# EUROPEAN PATENT APPLICATION

(11) **EP 1 447 427 A1**
(43) Date of publication of application: **18.08.2004**
(21) Application number: 02775317.7
(22) Date of filing: 10.10.2002
(51) Int. Cl.: C08L 51/00, C08F 261/00, C08F 2/44, C08K 3/22, C08K 3/36, B32B 27/30

(54) **LIGHT CURABLE COMPOSITION AND CURED PRODUCT AND LAMINATE THEREFROM**

(30) Priority: 11.10.2001 JP 2001314128
(71) Applicant: JSR Corporation, Tokyo 104-8410 (JP)
(72) Inventor: SUZUKI, Katsumi, c/o JSR CORPORATION, Chuo-ku, Tokyo 104-8410 (JP); SUGIYAMA, Naoki, c/o JSR CORPORATION, Chuo-ku, Tokyo 104-8410 (JP)
(74) Representative: Leson, Thomas Johannes Alois, Dipl.-Ing.
(86) International application number: PCT/JP2002/010532
(87) International publication number: WO 2003/033591

(57) **Abstract**

A photocurable composition comprising (A) oxide particles of at least one kind of element selected from the group consisting of silicon, aluminum, zirconium, titanium, zinc, germanium, indium, tin, antimony and cerium, (B) a hydroxyl group-containing polymer having a weight average molecular weight of 10,000 or more, and (C) a polyfunctional (meth)acrylate. This photocurable composition exhibits superior coating property and can form a coated film (coating film) having high hardness and high refractive index as well as superior antiscratching property and transparency on surfaces of various substrates.

## Description

### Technical Field

The present invention relates to a curable composition, a cured product thereof and a laminate thereof. More precisely, the present invention relates to a curable composition that has superior coating property and can be used to form a coated film (coating film) having high hardness and high refractive index as well as superior antiscratching property and transparency on surfaces of various substrates (for example, plastics such as polycarbonate, polymethyl methacrylate, polystyrene, MS resin, polyester such as PET, polyolefin, epoxy resin, melamine resin, triacetyl cellulose resin, ABS resin, AS resin and norbornene type resin, metal, wood, paper, glass, slate etc.), a cured product thereof and a laminate thereof. The curable composition of the present invention, cured product thereof and laminate thereof can be suitably used as, for example, a protective coating material for preventing damages (scratches) and fouling of plastic optical components, touch panels, film-type liquid crystal elements, plastic containers, flooring materials as interior building materials, wall plate materials, artificial marble etc.; antireflection film for film-type liquid crystal elements, touch panels, plastic optical components etc.; adhesive or sealing material for various substrates; binder material for printing ink and so forth, in particular, as antireflection film.

### Background Art

In recent years, a curable composition that can be used to form a cured film having superior coating property and being superior in all of hardness, antiscratching property, abrasion resistance, low curling property, adhesion, transparency, chemical resistance and appearance of the coated film surface on surfaces of various substrates is being required as a protective coating material for preventing damage (scratching) or fouling of surfaces of various substrates; adhesive or sealing material for various substrates; and binder material for printing ink.

For use in antireflection films of film-type liquid crystal elements, touch panels and plastic optical components, a curable composition that can form a cured film having a high refractive index in addition to the above requirements is being required.

For satisfying these requirements, various compositions have been proposed. So far, however, no composition has been obtained which has superior coating property as a curable composition, exhibits high hardness and high refractive index as well as superior antiscratching property and adhesion to a substrate and a low refractive index layer used for a laminate mentioned later when it is made as a cured film, and exhibits low reflectance and superior chemical resistance when it is used in a laminate having a low refractive index film on the cured film provided by coating.

As materials for forming antireflection films, for example, heat-curable type polysiloxane compositions are known, and they are disclosed in JP-A-61-247743, JP-A-6-25599, JP-A-7-331115, JP-A-10-232301 and so forth.

However, antireflection films obtained by using such heat-curable type polysiloxane compositions suffer from insufficient antiscratching property and as a result, insufficient durability.

Further, in the production of such antireflection films, a heat treatment at a high temperature for a long period of time is required. Thus, the productivity is low, and types of applicable substrates are limited.

Therefore, as disclosed in JP-A-8-94806, a material for an antireflection film has been proposed which is prepared by laminating a high refractive index film comprising fine particles localized in a high refractive index binder resin and a low refractive index film made of ,a fluorine type copolymer in this order on a substrate.

More specifically, for forming the high refractive index film, a layer of fine particles such as metal oxide particles is formed on process paper in advance, and the layer is then pressed onto the high refractive index binder resin on the substrate to embed the fine particle layer in the high refractive index binder resin and thereby localize the fine particles.

Further, the low refractive index film is formed by curing a resin composition comprising a fluorine-containing copolymer of vinylidene fluoride and hexafluoropropylene, a polymerizable compound having an ethylenically unsaturated group and a polymerization initiator to form a thin film.

However, antireflection films obtained by using such heat-curable polysiloxane compositions suffer from insufficient antiscratching property and as a result, insufficient durability.

The present invention has been accomplished in view of the aforementioned problems, and an object of the present invention is to provide a curable composition that can provide a cured product exhibiting superior antiscratching property and transparency, a cured product formed from the curable composition and a laminate thereof.

In order to achieve the foregoing object, the inventors of the present invention conducted various researches. As a result, they found that a composition having the aforementioned properties can be obtained by using a photocurable composition comprising oxide particles of a particular element, (B) a hydroxyl group-containing polymer and (C) polyfunctional (meth)acrylate, and thus accomplished the present invention. That is, the present invention provides the following photocurable composition, cured product thereof and laminate thereof.

### Disclosure of the Invention

[1] A photocurable composition comprising (A) oxide particles of at least one kind of element selected from the group consisting of silicon, aluminum, zirconium, titanium, zinc, germanium, indium, tin, antimony and cerium, (B) a hydroxyl group-containing polymer having a weight average molecular weight of 10,000 or more, and (C) a polyfunctional (meth)acrylate.
[2] The aforementioned photocurable composition, wherein a polymerizable unsaturated group-containing organic compound (R) binds to the oxide particles (A).
[3] The aforementioned photocurable composition, wherein the component (B) is a polyvinyl alcohol type resin.
[4] The aforementioned photocurable composition, wherein the component (B) is a polyvinyl butyral resin.
[5] The aforementioned photocurable composition, which further comprises an acid generating agent (D) in addition to the components (A), (B) and (C).
[6] A cured product obtained by curing the aforementioned photocurable composition.
[7] A laminate having a layer comprising the aforementioned cured product on a substrate.

### Best Mode for Carrying out the Invention

Hereafter, the components of the curable composition of the present invention will be specifically explained.

### 1. Oxide particles (A)

In view of colorlessness of cured coating film of the curable composition to be obtained, the oxide particles (A) used in the present invention are oxide particles of at least one kind of element selected from the group consisting of silicon, aluminum, zirconium, titanium, zinc, germanium, indium, tin, antimony and cerium. Specific examples thereof include particles of silica, alumina, zirconia, titanium oxide, zinc oxide, germanium oxide, indium oxide, tin oxide, indium tin oxide (ITO), antimony oxide, antimony-containing tin oxide (ATO), cerium oxide and so forth. Among these, particles of silica, alumina, zirconia and antimony oxide are preferred in view of high hardness. One kind of these oxide particles (A) can be used solely, or two or more kinds of them can be used in combination.

Further, oxide particles (A) are preferably in the form of powder or sol dispersed in a solvent. When they are in the form of sol dispersed in a solvent, the dispersion medium is preferably an organic solvent in view of miscibility and dispersibility with respect to the other components. Examples of such an organic solvent include alcohols such as methanol, ethanol, isopropanol, butanol and octanol; ketones such as acetone, methyl ethyl ketone, methyl isobutyl ketone and cyclohexanone; esters such as ethyl acetate, butyl acetate, ethyl lactate, γ-butyrolactone, propylene glycol monomethyl ether acetate and propylene glycol monoethyl ether acetate; ethers such as ethylene glycol monomethyl ether and diethylene glycol monobutyl ether; aromatic hydrocarbons such as benzene, toluene and xylene; amides such as dimethylformamide, dimethylacetamide and N-methylpyrrolidone and so forth. Among these, methanol, isopropanol, butanol, methyl ethyl ketone, methyl isobutyl ketone, ethyl acetate, butyl acetate, toluene and xylene are preferred.

The number average primary particle diameter of the oxide particles (A) is preferably 0.001 to 2 µm, more preferably 0.001 to 0.2 µm, particularly preferably 0.001 to 0.1 µm. When the number average primary particle diameter exceeds 2 µm, transparency tends to be degraded when the composition is made into a cured product, or surface condition tends to be degraded when the composition is made into a coating film. On the other hand, when the number average primary particle diameter is less than 0.001 µm, sufficient antiscratching property cannot be obtained. Further, various surfactants or amines may be added to improve dispersibility of the particles.

The shape of each of oxide particle (A) may be spherical, hollow, porous, rod-like, plate-like, fibrous or irregular shape, and it is preferably a spherical shape. The specific surface area (as determined by the BET specific surface area measurement method using nitrogen) of the oxide particles (A) is preferably 10 to 1000 m²/g, more preferably 100 to 500 m²/g. These oxide particles (A) can be used in the form of dry powder or dispersion in water or an organic solvent. For example, a dispersion of oxide particles in the forms of microparticles known to those skilled in the art as sol of the aforementioned oxide dispersed in a solvent can be used as it is. In particular, a sol of the oxide dispersed in a solvent is preferably used in use where the cured product is required to exhibit superior transparency.

As commercially available products of silicon oxide particles (for example, silica particles), examples of colloidal silica include Methanol Silica Sol, IPA-ST, MEK-ST, NBA-ST, XBA-ST, DMAC-ST, ST-UP, ST-OUP, ST-20, ST-40, ST-C, ST-N, ST-O, ST-50, ST-OL (trade names, produced by Nissan Chemical Industries Co., Ltd.) and so forth. Examples of powdery silica include Aerosil 130, Aerosil 300, Aerosil 380, Aerosil TT600 and Aerosil OX50 (trade names, produced by Nippon Aerosil Co., Ltd.), Sildex H31, H32, H51, H52, H121 and H122 (trade names, produced by Asahi Glass Co., Ltd.), E220A and E220 (trade names, produced by Nippon Silica Industrial Co., Ltd.), SYLYSIA 470 (trade name, produced by Fuji Silysia Chemical Ltd.), SG Flake (trade name, produced by Nippon Sheet Glass Co., Ltd.) and so forth.

Further, examples of water dispersion products of alumina particles include Alumina Sol 100, Alumina Sol 200 and Alumina Sol 520 (trade names, produced by Nissan Chemical Industries Co., Ltd.); examples of isopropanol dispersion product of alumina particles include AS-150I (trade name, produced by Sumitomo Osaka Cement Co., Ltd.); and examples of toluene dispersion product of alumina particles include AS-150T (trade name, produced by Sumitomo Osaka Cement Co., Ltd.) and so forth.

Examples of toluene dispersion product of zirconia particles include HXU-110JC (trade name, produced by Sumitomo Osaka Cement Co., Ltd.); examples of water dispersion of zinc antimonate particles include CELNAX (trade name, produced by Nissan Chemical Industries Co., Ltd.); examples of powder or solvent dispersion products of alumina particles, titanium oxide particles, tin oxide particles, indium oxide particles, zinc oxide particles etc. include NanoTek (trade name, produced by C.I. Kasei Co., Ltd.); examples of water dispersion sol of ATO particles include SN-100D (trade name, produced by Ishihara Sangyo Kaisha, Ltd.); examples of ITO powder include products produced by Mitsubishi Materials Corporation; and examples of water dispersion of cerium oxide particles include Needral (trade name, produced by Taki Chemical Co., Ltd.).

The addition amount of the oxide particles (A) is preferably 5 to 99% by weight, more preferably 10 to 98% by weight, with respect to the photocurable composition taken as 100% by weight.

### 2. Reactive particles (RA)

The oxide particles (A) used in the present invention are preferably used as reactive particles (RA) bound by an organic compound (R) having a polymerizable unsaturated group (hereinafter referred to as an "organic compound (R)").

### (1) Organic compound (R)

The organic compound (R) used in the present invention is a compound having a polymerizable unsaturated group in the molecule, and it is preferably a particular organic compound containing a group represented by the following formula (1):

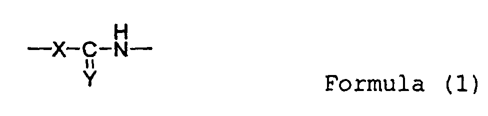

In the formula (1), X represents NH, O (oxygen atom) or S (sulfur atom), and Y represents O or S.

Further, the compound preferably contains a [-O-C(=O)-NH-] group and further at least one of a [-O-C(=S)-NH-] group and a [-S-C(=O)-NH-] group. Further, this organic compound (R) is preferably a compound having a silanol group in the molecule or a compound in which a silanol group is formed by hydrolysis.

### (i) Polymerizable unsaturated group

The polymerizable unsaturated group contained in the organic compound (R) is not particularly limited. However, preferred examples thereof include acryloyl group, methacryloyl group, vinyl group, propenyl group, butadienyl group, styryl group, ethynyl group, cinnamoyl group, maleate group and acrylamide group.

This polymerizable unsaturated group is a component unit of addition polymerization using active radical species.

### (ii) Group represented by formula (1)

The particular organic compound can contain one kind of the group represented by the formula (1) or a combination of two or more kinds of the groups. In particular, in view of thermal stability, the [-O-C(=O)-NH-] group and at least one of the [-O-C(=S)-NH-] group and the [-S-C(=O)-NH-] group are preferably used in combination.

It is considered that if the group [-X-C(=Y)-NH-) represented by the formula (1) is contained, the cured product can be imparted with properties including superior mechanical strength, adhesion to a substrate, heat resistance and so forth.

### (iii) Silanol group or group forming silanol group by hydrolysis

The organic compound (R) is preferably a compound having a silanol group in the molecule (hereinafter referred to as a "silanol group-containing compound") or a compound forming a silanol group by hydrolysis (hereinafter referred to as a "silanol group-forming compound"). Examples of such a silanol group-forming compound include compounds in which an alkoxy group, aryloxy group, acetoxy group, amino group, halogen atom or the like binds to a silicon atom. Compounds in which an alkoxy group or an aryloxy group binds to a silicon atom, that is, alkoxysilyl group-containing compounds or aryloxysilyl group-containing compounds are preferred.

The silanol group or the site of the silanol group-forming compounds at which a silanol group is formed is a component unit bound to the oxide particles (A) by a condensation reaction or condensation reaction subsequent to hydrolysis.

### (iv) Preferred embodiments

Preferred specific examples of the organic compound (R) include compounds represented by the following formula (2):

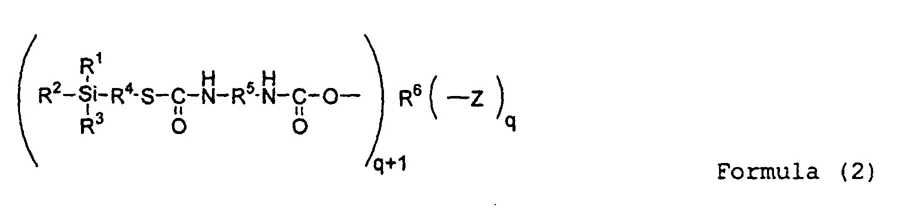

In the formula (2), R¹, R² and R³ each independently represent a hydrogen atom, alkyl group or aryl group, and at least one of them is a hydroxy group, alkoxy group or aryloxy group. The alkoxy group and the alkyl group preferably contain 1 to 8 carbon atoms. Specifically, preferred examples thereof include methoxy group, ethoxy group, propoxy group, butoxy group, octyloxy group, methyl group, ethyl group, propyl group, butyl group, octyl group and so forth. Further, the aryloxy group and the aryl group preferably contain 6 to 18 carbons. Specifically, preferred examples thereof include phenoxy group, xylyloxy group, phenyl group, xylyl group and so forth. Examples of the group represented by R¹(R²)(R³)Si- include trimethoxysilyl group, triethoxysilyl group, triphenoxysilyl group, methyldimethoxysilyl group, dimethylmethoxysilyl group and so forth. Among these groups, trimethoxysilyl group, triethoxysilyl group and so forth are preferred.

R⁴ represents a divalent organic group having an aliphatic or aromatic structure containing 1 to 12 carbon atoms, and may contain a linear, branched or cyclic structure in the structure. Examples of such a structural unit include an aliphatic group such as methylene, ethylene, propylene, methylethylene, butylene, methylpropylene, octamethylene and dodecamethylene; alicyclic group such as cyclohexylene; aromatic group such as phenylene, 2-methylphenylene, 3-methylphenylene and biphenylene and so forth. Among these, methylene, propylene, cyclohexylene, phenylene and so forth are preferred.

R⁵ represents a divalent organic group, and preferably has a molecular weight of 10,000 or less, particularly preferably a molecular weight of 1000 or less. Examples of the organic group include divalent organic groups having an aliphatic or aromatic structure, and the organic group may contain a linear, branched or cyclic structure as its structure. Such a structural unit can be selected from divalent organic groups having a linear basic structure such as methylene, ethylene, propylene, tetramethylene, hexamethylene, 2,2,4-trimethylhexamethylene and 1-(methylcarboxyl)-pentamethylene; divalent organic groups having an alicyclic basic structure such as isophorone, cyclohexylmethane, methylene bis(4-cyclohexane), hydrogenated dienylmethane, hydrogenated xylene and hydrogenated toluene; and divalent organic group having an aromatic ring structure such as benzene, toluene, xylene, paraphenylene, diphenylmethane, diphenylpropane and naphthalene.

R⁶ represents a (q+1)-valent organic group, and is preferably selected from linear, branched or cyclic saturated hydrocarbon groups and unsaturated hydrocarbon groups.

Z represents a monovalent organic group having a polymerizable unsaturated group, and examples thereof include acryloyl(oxy) group, methacryloyl(oxy) group, vinyl(oxy) group, propenyl(oxy) group, butadienyl(oxy) group, styryl(oxy) group, ethynyl(oxy) group, cinnamoyl(oxy) group, maleate group, acrylamide group, methacrylamide group and so forth. Among these, acryloyl(oxy) group and methacryloyl(oxy) group are preferred.

Further, q is preferably an integer of 1 to 20, more preferably an integer of 1 to 10, particularly preferably an integer of 1 to 5.

The organic compound (R) used in the present invention can be synthesized by using the method described in JP-A-9-100111, for example.

For the production of reactive particles (RA), the method can be selected from a method in which the aforementioned alkoxysilane compound is separately subjected to hydrolysis, then mixed with powdered oxide particles or a sol of oxide particles dispersed in a solvent, heated and stirred; a method in which the aforementioned alkoxysilane compound is hydrolyzed in the presence of oxide particles; a method in which surfaces of oxide particles are treated in the presence of another component, for example, the hydroxyl group-containing polymer (B) or the like, and so forth. Among these, the method in which the aforementioned alkoxysilane compound is hydrolyzed in the presence of oxide particles is preferred. During the production of the reactive particles (RA), the temperature is preferably between 0°C and 150°C inclusive, more preferably between 20°C and 100°C inclusive. The treatment time is usually in the range of 5 minutes to 24 hours.

During the production of the reactive particles (RA), when powdered oxide particles are used, an organic solvent may be added in order to smoothly and uniformly attain the reaction with the aforementioned alkoxysilane compound. As such an organic solvent, the same solvents as those used as the dispersion medium of the aforementioned sol of oxide particles dispersed in a solvent can be used. The addition amount of the solvent is not particularly limited so long as the reaction is smoothly and uniformly attained.

When a sol of oxide particles dispersed in a solvent is used as a raw material of reactive particles (RA), the particles can be produced at least by mixing the sol dispersed in a solvent and the organic compound (R). In order to ensure uniformity at the initial stage of the reaction and smoothly advance the reaction, an organic solvent that is uniformly miscible with water may be added.

Further, during the production of the reactive particles (RA), in order to promote the reaction, an acid, salt or base may be added as a catalyst. Examples of the acid include, for example, inorganic acids such as hydrochloric acid, nitric acid, sulfuric acid and phosphoric acid; organic acids such as methanesulfonic acid, toluenesulfonic acid, phthalic acid, malonic acid, formic acid, acetic acid and oxalic acid; and unsaturated organic acids such as methacrylic acid, acrylic acid and itaconic. acid. Examples of the salt include, for example, ammonium salts such as tetramethylammonium hydrochloride and tetrabutylammonium hydrochloride. Examples of the base include, for example, aqueous ammonia, primary, secondary or tertiary aliphatic amines such as diethylamine, triethylamine, dibutylamine and cyclohexylamine, aromatic amines such as pyridine, sodium hydroxide, potassium hydroxide, quaternary ammonium hydroxides such as tetramethylammonium hydroxide and tetrabutylammonium hydroxide and so forth.

Among these, organic acids and unsaturated organic acids are preferred as the acid, and tertiary amines and quaternary ammonium hydroxides are preferred as the base. The addition amount of the acid, salt or base is 0.001 to 1 parts by weight, more preferably 0.01 to 0.1 parts by weight, with regard to 100 parts by weight of the alkoxysilane compound.

Further, in order to promote the reaction, a dehydrating agent is preferably added. Examples of the dehydrating agent include inorganic compounds such as zeolite, anhydrous silica and anhydrous alumina and organic compounds such as methyl orthoformate, ethyl orthoformate tetraethoxymethane and tetrabutoxymethane. Among these, organic compounds are preferred, and ortho esters such as methyl orthoformate and ethyl orthoformate are more preferred.

The amount of the alkoxysilane compound bound to the reactive particles (RA) can usually be obtained as a constant weight value of weight loss % observed when dry powder of the particles is completely burnt in the air by thermogravimetric analysis from 110 to 800°C in the air.

The content of the oxide particles (A) in the reactive particles (RA) is preferably 5 to 99% by weight, more preferably 10 to 99% by weight.

When the amount of the organic compound (R) bound to the oxide particles (A) is less than 1% by weight, dispersibility of the reactive particles (RA) in the composition becomes insufficient, and transparency and antiscratching property of the obtained cured product may become insufficient.

The amount of the reactive particles (RA) represents the solid content and does not include the amount of solvent when the reactive particles (RA) are used in the form of a sol dispersed in a solvent.

### 3. Hydroxyl group-containing polymer (B)

Any polymers having a hydroxyl group in the molecules can be suitably used as the hydroxyl group-containing polymer (B). More specifically, examples thereof include one kind of polymer or combinations of two or more kinds of polymers selected from polyvinyl alcohol type resins, polyacrylate type resins, polyphenol type resins such as novolac resins and resol resins, polyphenoxy resins, polyparavinylphenol and so forth. Examples of the polyvinyl alcohol type resins include polyvinyl acetal resins such as polyvinyl butyral resins and polyvinyl formal resins, polyvinyl alcohol resins and so forth.

Among these hydroxyl group-containing polymers, however, polyvinyl butyral resins are most preferred, because they have superior adhesion to a substrate and mechanical properties, and in addition, uniform dispersion of the oxide particles is relatively easy.

Further, among the polyvinyl butyral resins, resins having physicochemical properties of a weight average molecular weight of 3000 or more, preferably 10,000 or more, a polyvinyl alcohol unit content in one molecule of 18% by weight or higher and a glass transition point of 70°C or higher are preferred. If the weight average molecular weight is 3000 or more, improvement of the antiscratching property is observed. If it is 10,000 or more, effect of improving antiscratching property is exhibited with a smaller addition amount. Therefore, such resins are preferred because they enable easy balance with other physicochemical properties such as transparency and storage stability of a coating solution. Further, a polyvinyl alcohol unit content in one molecule of 18% by weight or higher favorably provides superior particle dispersibility. Further, a glass transition point of 70°C or higher favorably provides high strength and superior antiscratching property of the coated film to be obtained.

Examples of commercially available polyvinyl butyral resins include DENKA Butyral 2000-L, 3000-1, 3000-2 and 3000-4 produced by Denki Kagaku Kogyo K.K., S-LEC B and S-LEC K produced by Sekisui Chemical Co., Ltd. and so forth.

Further, the addition amount of the hydroxyl group-containing polymer (B) is preferably in the range of 0.01 to 20% by weight, more preferably in the range of 0.5 to 10% by weight, with regard to 100% by weight of the photocurable composition. This is because if the addition amount of the hydroxyl group-containing polymer is less than 0.01% by weight, the antiscratching property of the obtained cured film may be degraded, whereas if the amount of the hydroxyl group-containing polymer exceeds 20 parts by weight, the amount of oxide microparticles may relatively decrease, adjustment of the refractive index of the cured film may become difficult, and the dispersibility of the oxide particles may be degraded, which may result in degradation of the storage stability of the dispersion.

### 4. Polyfunctional (meth)acrylate (C)

The polyfunctional (meth)acrylate (C) is a compound containing at least two of (meth)acryloyl groups in the molecule, and is preferably used to improve the film forming property of the composition.

### (i) Specific examples of polyfunctional (meth)acrylate (C)

Specific examples of the component (C) used in the present invention will be listed below.

Examples of the component (C) include trimethylolpropane tri(meth)acrylate, ditrimethylolpropane tetra(meth)acrylate, pentaerythritol tri(meth)acrylate, pentaerythritol tetra(meth)acrylate, dipentaerythritol penta(meth)acrylate, dipentaerythritol hexa(meth)acrylate, glycerin tri(meth)acrylate, tris(2-hydroxyethyl)isocyanurate tri(meth)acrylate, ethylene glycol di(meth)acrylate, 1,3-butanediol di(meth)acrylate, 1,4-butanediol di(meth)acrylate, 1,6-hexanediol di(meth)acrylate, neopentyl glycol di(meth)acrylate, diethylene glycol di(meth)acrylate, triethylene glycol di(meth)acrylate, dipropylene glycol di(meth)acrylate, bis(2-hydroxyethyl)isocyanurate di(meth)acrylate, and poly(meth)acrylates of ethylene oxide or propylene oxide adducts of the starting alcohols for the foregoing poly(meth)acrylates, as well as oligoester (meth)acrylates, oligoether (meth)acrylates, oligourethane (meth)acrylates, oligoepoxy (meth)acrylates having two or more (meth)acryloyl groups in the molecules and so forth. Among these, dipentaerythritol hexa(meth)acrylate, dipentaerythritol penta(meth)acrylate, pentaerythritol tetra(meth)acrylate and ditrimethylolpropane tetra(meth)acrylate are preferred.

Commercially available products as the component (C) include ARONIX M-400, M-408, M-450, M-305, M-309, M-310, M-315, M-320, M-350, M-360, M-208, M-210, M-215, M-220, M-225, M-233, M-240, M-245, M-260, M-270, M-1100, M-1200, M-1210, M-1310, M-1600, M-221, M-203, TO-924, TO-1270, TO-1231, TO-595, TO-756, TO-1343, TO-902, TO-904, TO-905 and TO-1330 (trade names, produced by Toagosei Co., Ltd.), KAYARAD D-310, D-330, DPHA, DPHA-2C, DPCA-20, DPCA-30, DPCA-60, DPCA-120, DN-0075, DN-2475, SR-295, SR-355, SR-399E, SR-494, SR-9041, SR-368, SR-415, SR-444, SR-454, SR-492, SR-499, SR-502, SR-9020, SR-9035, SR-111, SR-212, SR-213, SR-230, SR-259, SR-268, SR-272, SR-344, SR-349, SR-601, SR-602, SR-610, SR-9003, PET-30, T-1420, GPO-303, TC-120S, HDDA, NPGDA, TPGDA, PEG400DA, MANDA, HX-220, HX-620, R-551, R-712, R-167, R-526, R-551, R-712, R-604, R-684, TMPTA, THE-330, TPA-320, TPA-330, KS-HDDA, KS-TPGDA and KS-TMPTA (trade names, produced by Nippon Kayaku Co., Ltd.), Light Acrylate PE-4A, DPE-6A and DTMP-4A (trade names, produced by Kyoeisha Chemical Co., Ltd.) and so forth.

Further, melamine (meth)acrylate compounds can also be preferably used as the polyfunctional (meth)acrylate (C). They are preferably compounds represented by the following formula (3) or (4) or a mixture thereof. They are more preferably condensates of a condensate of melamine, formaldehyde and alkyl monoalcohol having 1 to 12 carbon atoms with 2-hydroxyethyl acrylate.

In the present invention, melamine (meth)acrylate compounds refer to (meth)acrylate compounds having a melamine ring in the molecules.

These melamine (meth)acrylate compounds are preferably used to increase the refractive index of the cured product and improve the antiscratching property and transparency of the laminate.

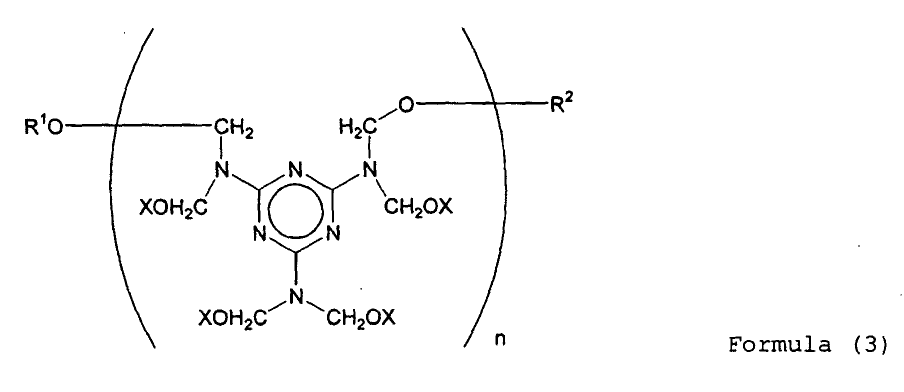

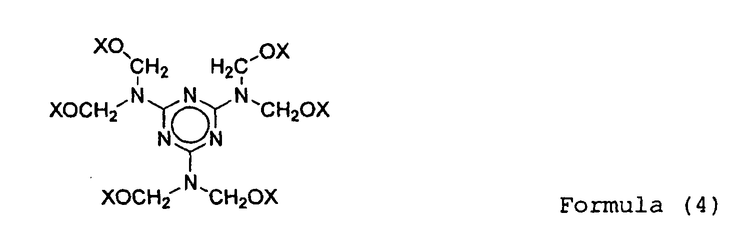

In the above formula (3), R¹ and R² may have any structure so long as they are monovalent organic groups. However, at least one of them preferably has the structure represented by the following formula (5).

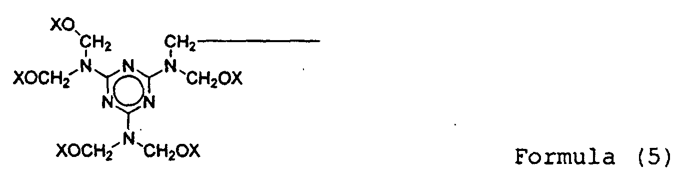

In the formulas (3), (4) and (5), X independently represents an alkyl group or (meth)acryloyloxyalkyl group having 1 to 5 carbon atoms, and at least one of them is a (meth)acryloyloxyalkyl group. Examples of the alkyl group include methyl group, ethyl group, n-propyl group, isopropyl group and so forth. Further, examples of the (meth)acryloyloxyalkyl group include acryloyloxyethyl group, methacryloyloxyethyl group, acryloyloxyisopropyl group, methacryloyloxyisopropyl group, acryloyloxybutyl group, methacryloyloxybutyl group and so forth.

In the formula (3), n is an integer of 1 to 10.

Examples of commercially available products of such melamine (meth)acrylate compounds include SETACURE 591 (trade name, produced by Akzo-Aktiengesellschaft) and NIKALAC MX-302 (trade name, produced by Sanwa Chemical Co., Ltd.) and so forth.

In addition to the component (C), a compound having a polymerizable unsaturated group in the molecule may be contained in the composition of the present invention as required.

### (ii) Addition amount

The addition amount of the component (C) used in the present invention is preferably 5 to 80% by weight, more preferably 10 to 75% by weight, with regard to 100% by weight of the photocurable composition.

This is because if the addition amount is less than 5% by weight, the film forming property of the cured product to be obtained may become insufficient during the curing of the curable composition, whereas if the amount exceeds 80% by weight, adjustment of the refractive index of the cured film may become difficult, and the antiscratching property may become insufficient.

### 5. Acid generating agent (D)

The acid generating agent (D) may be added as required to the composition of the present invention as a component other than the aforementioned reactive particles (RA), component (B) and component (C).

Although the acid generating agent (D) is not particularly limited, examples thereof include compounds that thermally generate cationic species, compounds that generate cationic species by radiation (light) irradiation and so forth.

Examples of the compounds that thermally generate cationic species include aliphatic sulfonic acids, aliphatic sulfonic acid salts, aliphatic carboxylic acid, aliphatic carboxylic acid salts, aromatic carboxylic acid, aromatic carboxylic acid salts, alkylbenzenesulfonic acids, alkylbenzenesulfonic acid salts, phosphoric acid esters, metal salts and so forth.

One kind of these compounds can be used solely or two or more kinds of them can be used in combination.

Preferred examples of the compounds that generate cationic species by light irradiation include onium salts having a structure represented by the following formula (6).

The onium salts are compounds that release Lewis acids by receiving light.

[R⁸ _{d}R⁹ ₑR¹⁰ _{f}R¹¹ _{g}Wₕ] ^{+j} [MYⱼ₊ₖ]^{-j} formula (6)

(In the formula (6), W represents S, Se, Te, P, As, Sb, Bi, O, I, Br, Cl or N≡N-, R⁸, R⁹, R¹⁰ and R¹¹ are organic groups, which may be identical or different, each of d, e, f and g is an integer of 0 to 3, and h is an integer determined on the basis of the definition that (d+e+f+g) is equal to the product of the valence of W and h. M represents a metal or metalloid constituting a center atom of the halide complex [MYⱼ₊ₖ] , and examples thereof include B, P, As, Sb, Fe, Sn, Bi, Al, Ca, In, Ti, Zn, Sc, V, Cr, Mn, Co and so forth. Y represents, for example, a halogen atom such as F, Cl and Br, j represents net charge of halide complex ions, and k represents the atomic valence of the atom represented by Y).

Specific examples of MYⱼ₊ₖ in the aforementioned formula (6) include tetrafluoroborate (BF₄⁻), hexafluorophosphate (PF₆⁻), hexafluoroantimonate (SbF₆⁻), hexafluoroarsenate (AsF₆⁻), hexachloroantimonate (SbCl₆⁻) and so forth.

Further, onium salts having an anion represented by the formula [MYₖ(OH)⁻] may also be used. Further, onium salts having another anion such as perchlorate ion (ClO₄⁻), trifluoromethanesulfonate ion (CF₃SO₃⁻), fluorosulfonate ion (FSO₃⁻), toluenesulfonate ion, trinitrobenzenesulfonate anion and trinitrotoluenesulfonate anion may also be used.

Examples of commercially available products preferably used as the acid generating agent (D) include Catalyst 4040, Catalyst 4050, Catalyst 600 and Catalyst 602 (trade names, produced by Mitsui-Cytec Ltd.), UVI-6950, UVI-6970, UVI-6974 and UVI-6990 (trade names, produced by Union Carbide), ADEKA Optomer SP-150, SP-151, SP-170 and SP-171 (trade names, produced by Asahi Denka Co., Ltd.), IRGACURE 261 (trade name, produced by Ciba Specialty Chemicals), CI-2481, CI-2624, CI-2639 and CI-2064 (trade names, produced by Nippon Soda Co., Ltd.), CD-1010, CD-1011 and CD-1012 (trade names, produced by Sartomer Co., Ltd.), DTS-102, DTS-103, NAT-103, NDS-103, TPS-103, MDS-103, MPI-103 and BBI-103 (trade names, produced by Midori Kagaku Co., Ltd.), PCI-061T, PCI-062T, PCI-020T and PCI-022T (trade names, produced by Nippon Kayaku Co., Ltd.), San-Aid SI-60(L), SI-80(L), SI-100(L), SI-L145, SI-L150 and SI-L160 (trade names, produced by Sanshin Chemical Industry Co., Ltd.) and so forth. Among these, Catalyst 4040, Catalyst 4050, Catalyst 600, Catalyst 602, ADEKA Optomer SP-150, SP-170, SP-171, CD-1012 and MPI-103, San-Aid SI-100(L), SI-L145 and SI-L150 are preferred, because these can improve the antiscratching property of the cured film without degrading the storage stability of the dispersion.

The addition amount of the acid generating agent (D) used in the present invention as required is preferably 0.01 to 20% by weight, more preferably 0.1 to 10% by weight, with regard to 100% by weight of the photocurable composition. This is because if the amount is less than 0.01% by weight, effect of the addition of the acid generating agent may not be obtained, whereas if the amount of the curing catalyst exceeds 20% by weight, the transparency of the cured product may become insufficient, and storage stability of the high refractive index material may become degraded.

Therefore, the amount of the curing catalyst is preferably in the range of 0.5 to 20% by weight, more preferably in the range of 1 to 10% by weight, with regard to 100% by weight of conductive metal oxide microparticles.

Further, instead of or in addition to the acid generating agent, a surfactant, polymer coagulant or the like may be added.

Examples of the surfactant include nonionic surfactants, anionic surfactants, cationic surfactants, amphoteric surfactants and so forth from the viewpoint of ionic species. From the viewpoint of chemical species, there can be mentioned silicone type surfactants, polyalkylene oxide type surfactants, fluorine-containing surfactants and so forth.

Examples of the polymer coagulants include cationic polymer coagulants such as aminoalkyl (meth)acrylate quaternary salt (co)polymers, polyaminomethylacrylamide salts, polyethyleneimines, cationized starch and chitosan, anionic polymer coagulants such as acrylate (co)polymers, formaldehyde condensates of sodium naphthalenesulfonate, sodium polystyrenesulfonate and carboxymethylcellulose salts, nonionic polymer coagulants such as polyethers, acrylamide polymers, ethylene oxide adducts of nonylphenol formaldehyde condensates and polyalkylene polyamines and so forth.

### 6. Photopolymerization initiator

A photopolymerization initiator is used to cure the composition.

### (i) Photopolymerization initiator

Examples of the photopolymerization initiator include one kind or combinations of two or more kinds of initiators selected from 1-hydroxycyclohexyl phenyl ketone, 2,2-dimethoxy-2-phenylacetophenone, xanthone, fluorenone, benzaldehyde, fluorene, anthraquinone, triphenylamine, carbazole, 3-methylacetophenone, 4-chlorobenzophenone, 4,4'-dimethoxybenzophenone, 4,4'-diaminobenzophenone, Michler's ketone, benzoin propyl ether, benzoin ethyl ether, benzyl dimethyl ketal, 1-(4-isopropylphenyl)-2-hydroxy-2-methylpropan-1-one, 2-hydroxy-2-methyl-1-phenylpropan-1-one, thioxanthone, diethylthioxanthone, 2-isopropylthioxanthone, 2-chlorothioxanthone, 2-methyl-1-[4-(methylthio)phenyl]-2-morpholinopropan-1-one, 2,4,6-trimethylbenzoyldiphenylphosphine oxide, bis-(2,6-dimethoxybenzoyl)-2,4,4-trimethylpentylphosphine oxide and so forth.

Among these photopolymerization initiators, 1-hydroxycyclohexyl phenyl ketone, 2,2-dimethoxy-2-phenylacetophenone, 2-methyl-1-[4-(methylthio)phenyl]-2-morpholinopropan-1-one, 2,4,6-trimethylbenzoyldiphenylphosphine oxide, and bis-(2,6-dimethoxybenzoyl)-2,4,4-trimethylpentylphosphine oxide are preferred.

However, the photopolymerization initiator particularly preferably contains at least 1-hydroxycyclohexyl phenyl ketone, since it enables further reliable curing of the curable composition of the present invention. Further, the content of 1-hydroxycyclohexyl phenyl ketone in the photocurable composition is preferably 1 to 5% by weight.

### (ii) Addition amount

The amount of the photopolymerization initiator in the curable composition of the present invention is preferably 10% by weight or less.

This is because if the addition amount exceeds 10% by weight, the photopolymerization initiator itself acts as a plasticizer, and thus the hardness of the cured product may be degraded.

### 7. Organic solvent

An organic solvent is preferably added to the curable composition of the present invention in addition to the aforementioned components (A) to (D).

The organic solvent is not particularly limited. However, preferably used is at least one kind of organic solvent selected from the group consisting ketones such as methyl ethyl ketone, methyl isobutyl ketone, 2-octanone, cyclohexanone and acetylacetone, alcohols such as ethanol, isopropyl alcohol, n-butanol, diacetone alcohol and 3-propoxy-1-propanol, ether group-containing alcohols such as ethylcellosolve, butylcellosolve and propylene glycol monomethyl ether, hydroxy esters such as methyl lactate, ethyl lactate and butyl lactate, β-ketoesters such as ethyl acetoacetate, methyl acetoacetate and butyl acetoacetate, aromatic hydrocarbons such as toluene and xylene, and aliphatic hydrocarbons such as n-octane, isooctane and n-decane. Among these, ketones such as methyl ethyl ketone, methyl isobutyl ketone, cyclohexanone and acetyl acetone are more preferred.

The organic solvent is added so that the concentration of the total solids in the curable composition should become 0.5 to 75%. That is, the amount of the organic solvent is preferably in the range of 33.3 to 19,900 parts by weight with regard to 100 parts by weight of the total solids.

This is because if the addition amount of the organic solvent is less than 33.3 parts by weight, the viscosity of the curable composition may increase, and thus the coating property may be degraded, whereas if the amount exceeds 19,900 parts by weight, the film thickness of the obtained cured product may become too thin to obtain sufficient antiscratching property.

### 8. Others

So long as the object or effect of the present invention is not adversely affected, the curable composition of the present invention may further contain additives such as photosensitizers, polymerization inhibitors, polymerization initiation aids, leveling agents, wettability improvers, surfactants, plasticizers, ultraviolet absorbers, antioxidants, antistatic agents, inorganic fillers, pigments and dyes.

### 9. Preparation method

The curable composition of the present invention can be prepared by adding the aforementioned components (A) to (D), organic solvent and additives as required and mixing them at room temperature or under a heating condition. Specifically, the composition can be prepared by using a blender such as a mixer, kneader, ball mill and three-roll mill. However, when the mixing is performed under a heating condition, the temperature is preferably below the degradation starting temperatures of the polymerization initiator and the acid generating agent. Further, when a thin film having a thickness of 1 µm or less is formed, the curable composition may be appropriately diluted with an organic solvent as required, before coating.

### 10. Method for applying composition (coating method)

The composition of the present invention is suitably used for antireflection films and covering materials. Examples of substrate as an object of prevention of reflection or covering include, for example, those of plastics such as polycarbonate, polymethyl methacrylate, polystyrene, MS resin and polyester such as PET, polyolefin, epoxy resin, melamine resin, triacetyl cellulose resin, ABS resin, AS resin and norbornene type resin, metal, wood, paper, glass, slate and so forth. These substrates may be in the form of plate, film or three-dimensionally molded product. Examples of the coating method include usual coating methods such as dip coating, spray coating, flow coating, shower coating, roll coating, spin coating, brush coating and so forth. The thickness of the film coated by these coating methods is usually 0.1 to 400 µm, preferably 1 to 200 µm, after drying and curing.

### 11. Curing condition

The curing condition of the curable composition is not particularly limited either. However, when radiation irradiation is performed, for example, the exposure is preferably in the range of 0.01 to 10 J/cm².

This is because if the exposure is less than 0.01 J/cm², curing defects may occur, whereas if the exposure exceeds 10 J/cm², the curing time may be excessively extended.

Further, for the aforementioned reasons, the exposure is more preferably in the range of 0.1 to 5 J/cm², still more preferably in the range of 0.3 to 3 J/cm².

### II. Cured product

The cured product of the present invention can be obtained by applying the aforementioned curable composition on any of various substrates, for example, a plastic substrate and curing it. Specifically, the composition is applied, dried preferably at 0 to 200°C to remove volatile components, and then cured by the aforementioned heating and/or radiation irradiation to obtain a covered molded product. The preferred condition for curing by heating is 20 to 150°C, and heating is performed for a period in the range of 10 seconds to 24 hours. When radiation irradiation is performed, an ultraviolet ray or electron beam is preferably used. In this case, the irradiation quantity of the ultraviolet ray is preferably 0.01 to 10 J/cm², more preferably 0.1 to 2 J/cm². Further, the electron beam is irradiated at an applied voltage of 10 to 300 KV, electron density of 0.02 to 0.30 mA/cm², and an electron beam irradiation quantity of 1 to 10 Mrad.

Since the cured product of the present invention has a characteristic that it can form a coated film (coating film) having high hardness and high refractive index as well as superior antiscratching property and adhesion to a substrate and a low refractive index layer, it can be particularly preferably used as an antireflection film for film-type liquid crystal elements, touch panels and plastic optical components.

### III. Laminate

The laminate of the present invention comprises a high refractive index cured film obtained by curing the aforementioned curable composition and a low refractive index film, which are laminated on a substrate in this order, and the laminate is particularly preferably used as an antireflection film.

The substrate used in the present invention is not particularly limited. However, when the laminate is used as an antireflection film, examples of the substrate include those of the aforementioned plastics (polycarbonate, polymethyl methacrylate, polystyrene, polyester, polyolefin, epoxy resin, melamine resins, triacetyl cellulose resin, ABS resin, AS resin, norbornene type resins and so forth) and so forth.

Examples of the low refractive index film used in the present invention include magnesium fluoride films, metal oxide films such as silicon dioxide films, fluorine type coating material cured films and so forth, which have a refractive index of 1.38 to 1.45.

Examples of the method for forming the low refractive index film on the high refractive index cured film obtained by curing the aforementioned curable composition include vacuum deposition, sputtering and so forth for metal oxide films, and the same methods as the aforementioned methods for applying the composition (coating methods) for fluorine type coating material cured films.

Light reflection on the substrate surface can be effectively prevented by laminating the aforementioned high refractive index cured film and the low refractive index film on the substrate as described above.

Since the laminate of the present invention has low reflectance as well as superior chemical resistance, it is particularly preferably used as an antireflection film for film-type liquid crystal elements, touch panels, plastic optical components etc.

### Examples

Hereafter, examples of the present invention will be explained in detail. However, the scope of the present invention is not limited by the descriptions of these examples. In the examples, the amounts of the components are indicated in terms of part by weight unless specifically indicated.

### Dispersion Example 1

### Dispersion of microparticles in organic solvent

To 700 parts of methyl ethyl ketone (MEK), 300 parts of spherical zirconia fine powder (produced by Sumitomo Osaka Cement Co., Ltd., number average primary particle diameter: 0.01 µm) was added and dispersed by using glass beads for 168 hours, and then the glass beads were removed to obtain 950 parts of methyl ethyl ketone zirconia sol (A-1). A an amount of 2 g of the dispersion sol was weighed on an aluminum plate, dried on a hot plate at 120°C for one hour, and weighed again to measure the solid content. As a result, it was found to be 30%. Further, as a result of electron microscopy of this solid, it was found that the particles had an average short axis length of 15 nm, average long axis length of 20 nm, and aspect ratio of 1.3.

### Synthesis Example 1

### Synthesis of organic compound having polymerizable unsaturated group

To a mixed solution of 7.8 parts of mercaptopropyltrimethoxysilane and 0.2 part of dibutyltin dilaurate in a vessel equipped with a stirrer, 20.6 parts of isophorone diisocyanate was added dropwise at 50°C over one hour in dry air, and the mixture was further stirred at 60°C for 3 hours.

To the mixture, 71.4 parts of pentaerythritol triacrylate was added dropwise at 30°C over one hour, and then the mixture was further stirred at 60°C for 3 hours to obtain a reaction solution.

The amount of the residual isocyanate in the product contained in the reaction solution, namely, the organic compound having a polymerizable unsaturated group, was measured by FT-IR and found to be 0.1% by weight or less. Thus, it was confirmed that each reaction proceeded substantially quantitatively. It was also confirmed that the molecule had a thiourethane bond, a urethane bond, an alkoxysilyl group and a polymerizable unsaturated group.

### Synthesis Example 2

### Synthesis of reactive zirconia fine powder sol (RA-1)

A mixture of 5.2 parts of the polymerizable unsaturated group-containing organic compound synthesized in Synthesis Example 1, 237 parts of the methyl ethyl ketone zirconia sol (A-1) (zirconia concentration: 30%) prepared in Dispersion Example 1, 0.1 part of ion exchanged water and 0.03 part of p-hydroxyphenyl monomethyl ether was stirred at 60°C for 3 hours, added with 1.0 part of orthoformic acid methyl ester, and further stirred with heating at the same temperature for one hour to obtain reactive particles (RA) (hereinafter referred to as "reactive particles RA-1"). The reactive particles RA-1 were weighed in an amount of 2 g on an aluminum plate, then dried on a hot plate at 120°C for one hour, and weighed again to measure the solid content. As a result, it was found to be 31%. Further, 2 g of the reactive particles RA-1 was weighed in a magnetic crucible, predried on a hot plate at 80°C for 30 minutes and baked in a muffle furnace at 750°C for one hour. The content of inorganic components in the solid was obtained from the inorganic residues obtained after the baking and found to be 93%.

### Synthesis Example 3

### Synthesis of reactive needle-like ATO fine powder sol (RA-2)

In a vessel equipped with a stirrer, 95 parts of needle-like ATO dispersion (FSS-10M, produced by Ishihara Techno Corp., dispersion solvent: methyl ethyl ketone, solid content: 30% by weight, average short axis length of particles of ATO fine powder: 15 nm, average long axis length of the particles: 150 nm, aspect ratio: 10), 0.8 part of the polymerizable unsaturated group-containing organic compound synthesized in Synthesis Example 1, 0.1 part of distilled water and 0.01 part of p-hydroxyphenyl monomethyl ether were mixed and stirred with heating at 65°C. After 5 hours, the reaction mixture was added with 0.3 part of orthoformic acid methyl ester and further heated for one hour to obtain reactive particles (RA) (hereinafter referred to as "reactive particles RA-2"). The solid content of the reactive particles RA-2 and the content of the inorganic components in the solid content were obtained in the same manner as in Synthesis Example 1 and found to be 30% and 88%, respectively.

### Preparation of composition

Hereafter, preparation examples of the compositions of the present invention will be shown in Examples 1 to 10, and comparative preparation examples will be shown in Comparative Examples 1 to 4. Further, the weight ratios of the components are shown in Table 1.

### Example 1

In a vessel shielded from ultraviolet rays, 254.2 parts of the reactive particles RA-1 (78.8 parts of reactive zirconia) prepared in Synthesis Example 2 and 9.8 parts of dipentaerythritol pentaacrylate (C-1) (trade name: KAYARAD DPHA-2C, produced by Nippon Kayaku Co., Ltd.) were mixed and then concentrated by using a rotary evaporator until the solid concentration became 57.7%. To this concentrate, 3.9 parts of butyral resin (B-1) (trade name: DENKA Butyral 2000-L, produced by Denki Kagaku Kogyo K.K., weight average molecular weight: 46,700, polyvinyl alcohol unit: 21% by weight, glass transition point: 71°C), 13.5 parts of acid generating agent (D-1) (trade name: Catalyst 4050, produced by Mitsui-Cytec Ltd., isopropyl alcohol solution, solid concentration: 55% by weight), 0.5 part of 1-hydroxycyclohexyl phenyl ketone, 0.5 part of 2-methyl-1-[4-(methylthio)phenyl]-2-morpholinopropanone-1 and 36.3 parts of cyclohexanone were added and stirred at 30°C for 2 hours to obtain a composition as a uniform solution. The solid content in this composition was measured in the same manner as in Synthesis Example 2 and found to be 48%.

The compositions of Examples 2, 3, 5, 7, 8, 9 and 10 and Comparative Examples 1, 3, 4 and 5 shown in Table 1 were obtained in the same manner.

The compositions of Example 4 and Comparative Example 2 shown in Table 1 were obtained in the same manner as in Example 1 except that a mixture of the reactive particles RA-1 obtained in Synthesis Example 2 and the reactive particles RA-2 obtained in Synthesis Example 3 was used instead of the reactive particles RA-1.

The composition of Example 6 shown in Table 1 was obtained in the same manner as in Example 1 except that the oxide particles A-1 obtained in Dispersion Example 1 were used instead of the reactive particles RA-1.

The composition of Example 7 shown in Table 1 was obtained in the same manner as in Example 1 except that 0.01 part of butyral resin (B-2) (trade name: DENKA Butyral 3000-2, produced by Denki Kagaku Kogyo K.K., weight average molecular weight: 104,000, polyvinyl alcohol unit: 19% by weight, glass transition point: 73°C) was used instead of the hydroxyl group-containing polymer B-1.

The composition of Comparative Example 3 shown in Table 1 was obtained in the same manner as in Example 1 except that 6.0 parts of novolac resin (B-3) (trade name: KP-911, produced by Arakawa Chemical Industries, Ltd., weight average molecular weight: 1,000, glass transition temperature: 143°C) was used instead of the hydroxyl group-containing polymer B-1.

### Preparation of curable composition for low refractive index film (coating solution A)

### (i) Preparation of fluorine-containing polymer having hydroxyl group

The atmosphere in a stainless steel autoclave having an internal volume of 1.5 1 and equipped with an electromagnetic stirrer was thoroughly replaced with nitrogen gas. Then, to the autoclave, 500 g of ethyl acetate, 34.0 g of ethyl vinyl ether (EVE), 41.6 g of hydroxyethyl vinyl ether (HEVE), 75.4 g of perfluoropropyl vinyl ether (FPVE), 1.3 g of lauroyl peroxide, 7.5 g of a silicone-containing polymer azo initiator (trade name: VPS 1001, produced by Wako Pure Chemical Industries, Ltd.) and 1 g of a reactive emulsifier (trade name: NE-30, produced by Asahi Denka Kogyo K.K.) were charged, and after the mixture was cooled to -50°C using dry ice/methanol, oxygen in the system was purged with nitrogen gas again.

Then, 119.0 g of hexafluoropropylene (HFP) was further charged, and the temperature rise was started. The pressure in the autoclave was 5.5 × 10⁵ Pa when the temperature in the autoclave reached 70°C. Thereafter, the reaction was continued at 70°C for 20 hours. When the pressure decreased to 2.3 × 10⁵ Pa, the autoclave was cooled with water to terminate the reaction. After the temperature of the reaction mixture reached room temperature, the unreacted monomers were discharged, and the autoclave was opened to obtain a polymer solution having a solid concentration of 30% by weight. The resulting polymer solution was poured into methanol to precipitate the polymer, and the polymer was further washed with methanol and dried at 50°C under vacuum to obtain 170 g of a fluorine-containing polymer having a hydroxyl group.

Intrinsic viscosity of the resulting fluorine-containing polymer having a hydroxyl group was measured (N,N-dimethylacetamide solvent was used, measurement temperature: 25°C) and found to be 0.28 dl/g.

Further, glass transition temperature of the fluorine-containing polymer was also measured by using DSC (differential scanning calorimeter) with a temperature increase rate of 5°C/min in a nitrogen flow and found to be 31°C.

Fluorine content of the fluorine-containing polymer was also measured by using the alizarin complexon method and found to be 51.7%.

Furthermore, the hydroxyl group value of the fluorine-containing polymer was measured by the acetylation method using acetic acid anhydride and found to be 102 mg KOH/g.

### (ii) Preparation of curable composition for low refractive index film (coating solution A)

To a vessel equipped with a stirrer, 100 g of the fluorine-containing copolymer having a hydroxyl group which was obtained in (i), 11.1 g of Cymel 303 (alkoxylated methylmelamine compound, produced by Mitsui-Cytec Ltd.) and 3,736 g of methyl isobutyl ketone (hereinafter referred to as "MIBK") were added, and the mixture was stirred at 110°C for 5 hours to allow the fluorine-containing copolymer having a hydroxyl group to react with Cymel 303.

Then, 11.1 g of Catalyst 4040 (produced by Mitsui-Cytec Ltd., solid concentration: 40% by weight) was further added, and the resulting mixture was stirred for 10 minutes to obtain a curable composition for low refractive index film (hereinafter also referred to as the "coating solution A") having a viscosity of 1 mPa·s (measurement temperature: 25°C).

Refractive index of a low refractive index film obtained from the resulting curable composition for low refractive index film (coating solution A) was measured. That is, the curable composition for low refractive index film was applied to a silicon wafer (film thickness: 1 µm) by using a wire bar coater (#3) and air-dried at room temperature for 5 minutes to form a coating film.

Then, the coating film was heat-cured by using a hot-air dryer at 140°C for one minute to form a low refractive index film having a film thickness of 0.3 µm. Then, the refractive index for the Na-D line of the resulting low refractive index film was measured at 25°C by using a spectral ellipsometer. As a result, the refractive index was found to be 1.40.

### Preparation of laminate (antireflection film laminate)

A UV curable hard coat material Z7503 (produced by JSR Corporation, solid concentration: 50%,) was applied on a polyester film A4300 (produced by Toyobo Co., Ltd., film thickness: 188 µm) by using a wire bar coater (#20) and dried in an oven at 80°C for one minute to form a coated film. Subsequently, in the atmosphere, the coated film was cured with ultraviolet rays by using a metal halide lamp with an irradiation condition of 0.3 J/cm² to form a hardcoat layer having a film thickness of 10 µm.

Then, the compositions obtained in Examples 1 to 9 according to the present invention and the compositions obtained in Comparative Examples 1 to 5 were each applied on the hardcoat layer by using a coater equipped with a wire bar selected depending on the film thickness and dried in an oven at 80°C for one minute to form a coated film. Subsequently, the coated film was cured in the atmosphere with ultraviolet rays by using a metal halide lamp with an irradiation condition of 0.3 J/cm² to form a high refractive index film (intermediate layer) having a film thickness shown in Table 1.

Further, the obtained coating solution A was applied on the high refractive index film (intermediate layer) by using a wire bar coater (#3) and air-dried at room temperature for 5 minutes to form a coated film. This coated film was heated at 140°C for one minute by using an oven to form a low refractive index film having a film thickness of 0.1 µm and thus obtain an antireflection film laminate.

### Evaluation of antireflection film laminate

The anti scratching property of the obtained antireflection film laminates was evaluated according to the following evaluation criteria.

The antiscratching property, reflectance, turbidity (haze value) and total light transmission of the obtained antireflection film laminates were measured by the measurement methods described below.

### (i) Antiscratching property

The surface of the obtained antireflection film laminates was rubbed 30 times with #0000 steel wool under a load of 200 g/cm², and the antiscratching property of the antireflection film laminate was evaluated by visual inspection according to the following criteria. The obtained results are shown in Table 1.
Evaluation score 5: Generation of scratch was not observed at all.
Evaluation score 4: Generation of 1 to 5 of scratches was observed.
Evaluation score 3: Generation of 6 to 50 of scratches was observed.
Evaluation score 2: Generation of 51 to 100 of scratches was observed.
Evaluation score 1: Delamination of coated film was observed.

The antiscratching property corresponding to the evaluation score of 3 or more is practically acceptable, the antiscratching property corresponding to the evaluation score of 4 or more is preferred because such a film shows superior practical durability, and the antiscratching property corresponding to the evaluation score 5 is more preferred because the practical durability of such a film is markedly improved.

### (ii) Reflectance

The reflectance (the minimum reflectance in the measurement wavelength region) of the obtained antireflection film laminates was measured in the wavelength range of 340 to 700 nm according to JIS K7105 (Measurement method A) by using a spectral reflectance measurement apparatus (spectrophotometer U-3410, produced by Hitachi, Ltd., incorporated with a large-size sample chamber integrating sphere equipped apparatus 150-09090).

That is, the minimum reflectance of the antireflection film laminates (antireflection films) based on the reflectance of an aluminum deposited film as a standard (100%) was measured at each wavelength. The obtained results are shown in Table 1.

### (iii) Turbidity (haze value) and total light transmission

The haze value and the total light transmission of the obtained antireflection film laminates were measured according to JIS K7105 by using a color haze meter (produced by Suga Test Instrument Co., Ltd.). The obtained results are shown in Table 1.

**Table 1**

| | Examples | | | | | | | | | | Comparative Examples | | | |
|---|---|---|---|---|---|---|---|---|---|---|---|---|---|---|
| | 1 | 2 | 3 | 4 | 5 | 6 | 7 | 8 | 9 | 10 | 1 | 2 | 3 | 4 |
| Oxide particles (A) | | | | | | | | | | | | | | |
| A-1 | | | | | | 78.8 | | | | | | | | |

| Reactive particles (RA) | | | | | | | | | | | | | | |
|---|---|---|---|---|---|---|---|---|---|---|---|---|---|---|
| RA-1 | 78.8 | 78.8 | 78.8 | 63.8 | 19.1 | | 78.8 | 78.8 | 19.1 | 19.1 | 79.8 | 63.8 | 79.5 | 69.0 |
| RA-2 | | | | 15.9 | | | | | | | | 15.9 | | |

| Hydroxyl group-containing polymers (B) | | | | | | | | | | | | | | |
|---|---|---|---|---|---|---|---|---|---|---|---|---|---|---|
| B-1 | 3.9 | 3.9 | 2.0 | 2.0 | 0.4 | 3.9 | | 10.0 | 20.0 | 40.0 | | | | 30.0 |
| B-2 | | | | | | | 0.01 | | | | | | | |
| B-3 | | | | | | | | | | | | | 6.0 | |

| Polyfunctional (meth)acrylates (C) | | | | | | | | | | | | | | |
|---|---|---|---|---|---|---|---|---|---|---|---|---|---|---|
| C-1 | 9.8 | 9.7 | 11.6 | 7.9 | 27.8 | 9.8 | 9.8 | 10.2 | 8.2 | 8.2 | 19.2 | 7.9 | 16.5 | |
| C-2 | | 3.3 | | 4.0 | 50.0 | | 3.9 | | 50.0 | 30.0 | | 6.9 | | |

| Photopolymerization initiators (D) | | | | | | | | | | | | | | |
|---|---|---|---|---|---|---|---|---|---|---|---|---|---|---|
| D-1 | 0.5 | 0.5 | 0.5 | 0.5 | 0.7 | 0.5 | 0.5 | 0.5 | 0.7 | 0.7 | 0.5 | 0.5 | | 0.5 |
| D-2 | 0.5 | 0.5 | 0.5 | 0.5 | 0.4 | 0.5 | 0.5 | 0.5 | 0.4 | 0.4 | 0.5 | 0.5 | | 0.5 |

| Acid generating agent (E) | | | | | | | | | | | | | | |
|---|---|---|---|---|---|---|---|---|---|---|---|---|---|---|
| E-1 | 6.5 | 3.3 | 7.4 | 5.4 | 1.6 | 6.5 | 6.5 | | 1.6 | 1.6 | | 4.5 | | |

| Organic solvents | | | | | | | | | | | | | | |
|---|---|---|---|---|---|---|---|---|---|---|---|---|---|---|
| MEK | 65.0 | 65.0 | 65.0 | 65.0 | 82.7 | 65.0 | 65.0 | 65.0 | 82.7 | 82.7 | 54.2 | 65.0 | | 54.2 |
| Cydohexanone | 36.3 | 31.7 | 37.2 | 38.8 | 54.1 | 36.3 | 36.3 | 43.3 | 54.1 | 54.1 | 54.2 | 39.6 | | 54.2 |
| Isopropyl alcohol | 7.0 | 3.5 | 6.2 | 4.5 | 1.3 | 7.0 | 7.0 | | 1.3 | 1.3 | | 3.7 | | |
| n-Decane | | 5.4 | | | | | | | | | | | | |
| 2-Octanone | | 2.7 | | | | | | | | | | | | |
| Total | 208.3 | 208.3 | 208.4 | 208.3 | 238.1 | 208.3 | 208.3 | 208.3 | 238.1 | 238.1 | 208.4 | 208.3 | 208.3 | 208.3 |
| Solid content (%) | 48 | 48 | 48 | 48 | 42 | 48 | 48 | 48 | 42 | 42 | 48 | 48 | 48 | 48.0 |

| Physicochemical properties of laminate | | | | | | | | | | | | | | |
|---|---|---|---|---|---|---|---|---|---|---|---|---|---|---|
| Film thickness of intermediate layer (µm) | 2 | 2 | 2 | 2 | 2 | 2 | 2 | 2 | 2 | 2 | 2 | 2 | 2 | 2 |
| Reflectance (%) | 0.1 | 0.1 | 0.1 | 0.1 | 1.0 | 0.1 | 0.1 | 0.1 | 1.0 | 1.0 | 0.1 | 0.1 | 0.1 | 0.1 |
| Light transmission (%) | 90 | 90 | 89 | 90 | 90 | 90 | 90 | 90 | 90 | 90 | 90 | 89 | 87 | 75 |
| Haze (%) | 2.3 | 1.9 | 2.5 | 3.0 | 3.0 | 2.1 | 2.2 | 3.0 | 3.0 | 3.0 | 1.9 | 1.8 | 3.0 | 15.3 |
| Antiscratching property | 4 | 5 | 4 | 5 | 4 | 4 | 4 | 4 | 4 | 3 | 1 | 1 | 2 | 1 |

In Table 1, the numerals for the reactive particles (RA) indicate dry weights of fine powder (excluding organic solvent) contained in the used amount of dispersion sols.

The abbreviations used in Table 1 denote the followings:
RA-1: Reactive zirconia sol (A) produced in Synthesis

### Example 2

RA-2: Reactive needle-like ATO fine powder sol (A) produced in Synthesis Example 3
B-1: Butyral resin (DENKA Butyral 2000-L, produced by Denki Kagaku Kogyo K.K.)
B-2: Butyral resin (DENKA Butyral 3000-2, produced by Denki Kagaku Kogyo K.K.)
B-3: Novolac resin (KP-911, produced by Arakawa Chemical Industries, Ltd.)
C-1: Dipentaerythritol hexaacrylate
C-2: Melamine acrylate (NIKALAC MX-302, produced by Sanwa Chemical Co., Ltd.)
D-1: Acid generating agent (Catalyst 4050, produced by Mitsui-Cytec Ltd.)
PI-1: 1-Hydroxycyclohexyl phenyl ketone
PI-2: 2-Methyl-1-[4-(methylthio)phenyl]-2-morpholinopropanone-1
MEK: Methyl ethyl ketone

### Industrial Applicability

As explained above, according to the present invention, there can be provided a curable composition that has superior coating property and can be used to form a coated film (coating film) having high hardness and high refractive index as well as superior antiscratching property and transparency on a surface of various substrates, a cured product thereof and a laminate.

## Claims

1. A photocurable composition comprising (A) oxide particles of at least one kind of element selected from the group consisting of silicon, aluminum, zirconium, titanium, zinc, germanium, indium, tin, antimony and cerium, (B) a hydroxyl group-containing polymer having a weight average molecular weight of 10,000 or more, and (C) a polyfunctional (meth)acrylate.

2. The photocurable composition according to claim 1, wherein a polymerizable unsaturated group-containing organic compound (R) binds to the oxide particles (A).

3. The photocurable composition according to claim 1, wherein the component (B) is a polyvinyl alcohol type resin.

4. The photocurable composition according to claim 2, wherein the component (B) is a polyvinyl alcohol type resin.

5. The photocurable composition according to claim 3, wherein the component (B) is a polyvinyl butyral resin.

6. The photocurable composition according to claim 4, wherein the component (B) is a polyvinyl butyral resin.

7. The photocurable composition according to claim 1, which further comprises an acid generating agent (D) in addition to the components (A), (B) and (C).

8. A cured product obtained by curing the photocurable composition according to claim 1.

9. A laminate having a layer comprising the cured product according to claim 8 on a substrate.
